# NOUVEAU FASCICULE DE BREVET EUROPEEN

(11) **EP 2 330 024 B2**
(45) Date de publication et mention de la décision concernant l'opposition: **31.08.2016**
(45) Mention de la délivrance du brevet: 13.02.2013
(21) Numéro de dépôt: 10193978.3
(22) Date de dépôt: 07.12.2010
(51) Int. Cl.: B62D 49/08

(54) **Système de lestage et d'équilibrage pour tracteur**
BALLAST SYSTEM UND AUSGLEICH FÜR TRAKTOR
BALLAST SYSTEM AND BALANCING FOR TRACTOR

(30) Priorité: 07.12.2009 FR 0958719
(43) Date de publication de la demande: 08.06.2011
(73) Titulaire: Lestagri, 82500 Beaumont-de-Lomagne (FR)
(72) Inventeur: Farines, Marie, 66000 Perpignan (FR)
(74) Mandataire: Delprat, Olivier

(56) Documents cités:
- EP-B1- 1 701 875
- WO-A1-2009/098018
- US-A- 3 032 352
- US-A- 3 888 507
- Extrait du Standard international ISO11001-3 de 1993 ciblant les coupleurs à rotules intervenant dans dispositifs de couplage rapide trois points
- Extrait du standard international ISO730-1 de 1990
- Projet de révision de l'extrait du standard international ISO 730-1 de 1990 (2007-09-24)

## Description

La présente invention concerne, de manière générale, les systèmes de lestage et d'équilibrage pour tracteur, notamment tracteur agricole.

Il est connu de l'art antérieur que les systèmes de lestage et d'équilibrage comprennent des masses, souvent en fonte, accrochées à l'avant du tracteur, de façon à accroître le poids du tracteur durant des opérations requérant des forces de tractions élevées.

De manière conventionnelle, ces masses sont accrochées sur des supports venant se fixer à l'avant du tracteur. Il est alors indispensable de prévoir une structure auxiliaire apte à supporter une telle masse, ainsi que des moyens de levage de la masse afin de l'accrocher sur le tracteur. Sa manipulation nécessite donc l'intervention d'un système de levage supplémentaire.

Voir à ce sujet le document WO2009/098018-A-1, sur la description duquel document les caractéristiques du préambule de la revendication 1 sont fondées.

Les masses de lestage et d'équilibrage sont généralement pourvues de tétons de fixation de la masse sur un dispositif d'attelage d'un tracteur agricole. Les inconvénients de ce système sont sa fragilité et son risque élevé de rupture lors de l'avancement du tracteur, d'autant plus dangereux à vitesse élevée.

La vitesse d'avancement autorisée pour les véhicules agricoles s'est vue en effet modifiée au cours des dernières années, passant de 25km/h à 40km/h en France, voire à 60km/h dans certains pays.

Le but de l'invention est de palier les inconvénients liés à l'utilisation de tels systèmes de lestage et d'équilibrage et de proposer un système de lestage et d'équilibrage robuste et facilement modulable.

L'invention propose ainsi un système de lestage et d'équilibrage pour tracteur, notamment tracteur agricole, selon la revendication 1.

De préférence, l'invention concerne un système de lestage et d'équilibrage situé à l'avant d'un tracteur afin de l'alourdir et de l'équilibrer par rapport aux différentes forces exercées sur l'arrière et d'obtenir une meilleure adhérence des roues avant du véhicule sur le sol.

L'invention peut également concerner un système de lestage et d'équilibrage situé à l'arrière d'un tracteur. Cette application peut être employée pour de fortes tractions (outils traînés, cowercrop...) attelées à la barre oscillante du tracteur, afin de lester l'arrière du tracteur.

Chaque axe transversal comprend deux portions d'arbre séparées de chaque coté de l'axe de symétrie de la masse de lestage et d'équilibrage.

La masse de lestage et d'équilibrage présente deux évidements traversés chacun par l'une des portions d'arbre.

Les moyens de fixation comprennent deux axes transversaux dont l'un est situé en partie haute et l'autre est situé en partie basse de la masse de lestage et d'équilibrage. L'axe situé en partie basse permet de positionner la masse à une certaine distance du sol, de façon à obtenir une garde au sol plus élevée, nécessaire lors de déboisement ou lors d'un chargement sur un autre véhicule et l'axe situé en partie haute de la première masse permet, lors de l'arrêt du véhicule, de s'appuyer sur le sol afin de lever ledit véhicule. De cette manière, il est possible de changer les roues arrière ou avant du tracteur, selon la position de la masse, respectivement à l'avant ou à l'arrière du tracteur.

Dans un mode de réalisation, les moyens de fixation comprennent au moins deux boules d'attelage montées sur les parties centrales des axes transversaux et aptes chacune à coopérer avec une chape de fixation prévue sur le dispositif de levage.

Par exemple, les boules d'attelage peuvent être dotées d'un profil sphérique ou toroïdal.

Les moyens de fixation de la masse de lestage et d'équilibrage sur le tracteur comprennent avantageusement une potence fixée sur la masse de lestage et d'équilibrage, destinée à coopérer avec le dispositif de levage.

Par exemple, la potence comprend une platine et une chape verticale. La platine peut être fixée sur le dessus de la masse de lestage et d'équilibrage par le biais de vis, pouvant être au nombre de six.

Avantageusement, la masse de lestage et d'équilibrage présente sur au moins l'une des ses faces, des logements en queue d'aronde femelle pour le montage par emboîtement de masses supplémentaires.

Par exemple, chaque masse supplémentaire présente deux extrusions en queue d'aronde mâle venant s'emboîter dans les logements de la masse de lestage et d'équilibrage.

La masse de lestage et d'équilibrage peut également présenter, sur au moins l'une de ses faces, des logements additionnels du type femelle pour le montage par emboîtement de masses supplémentaires.

Par exemple, chaque masse supplémentaire présente deux extrusions latérales du type mâle qui s'emboîtent dans les logements additionnels de la masse de lestage et d'équilibrage.

Selon une autre caractéristique, la masse de lestage etd équilibrage comprend sur sa face supérieure un logement, de façon à créer un espace de rangement, par exemple pour des outils. éventuellement fermé par un couvercle fixé sur la platine. Cet espace de rangement peut comprendre en son fond des trous d'écoulement, afin d'éviter la stagnation de particules de poussières ou d'eau.

En outre, chaque masse supplémentaire comprend sur sa face arrière des évidements aptes à coopérer avec des moyens de manutention, de façon à ce que le conducteur puisse lui-même emboîter les masses supplémentaires sur la masse de lestage et d'équilibrage.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue d'une masse de lestage et d'équilibrage ;
- la figure 2 représente une vue en perspective d'une masse de lestage et d'équilibrage ;
- la figure 3 représente une vue en perspective d'un système de lestage et d'équilibrage selon une caractéristique de l'invention ;
- la figure 4 représente une vue en perspective d'un système de lestage et d'équilibrage selon une autre caractéristique de l'invention ;
- la figure 5 illustre une masse de lestage et d'équilibrage positionnée sur un tracteur ;
- la figure 6 illustre la fixation d'une boule d'attelage dans une chape de fixation ;
- la figure 7 représente une autre vue en perspective d'une masse de lestage et d'équilibrage ;
- la figure 8 représente une vue en perspective d'un système de lestage et d'équilibrage selon encore une autre caractéristique de l'invention ; et
- la figure 9 représente une vue en perspective d'une masse supplémentaire.

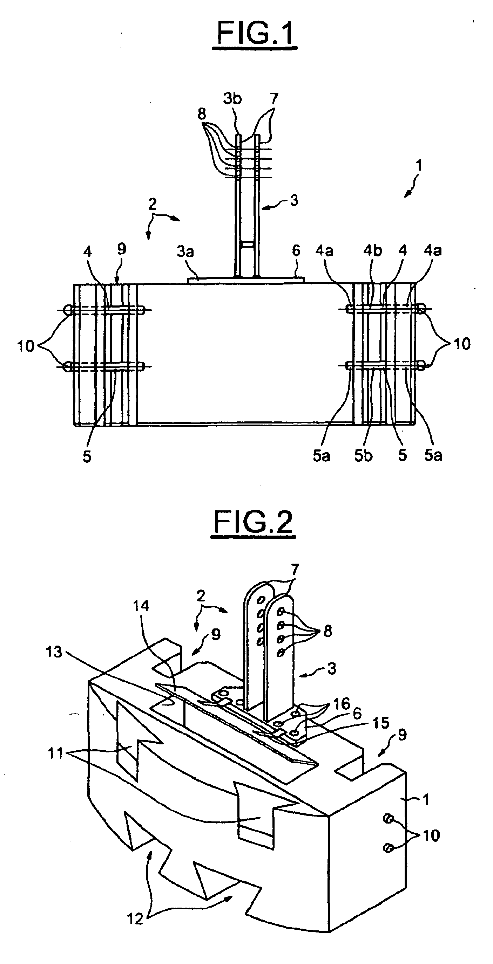

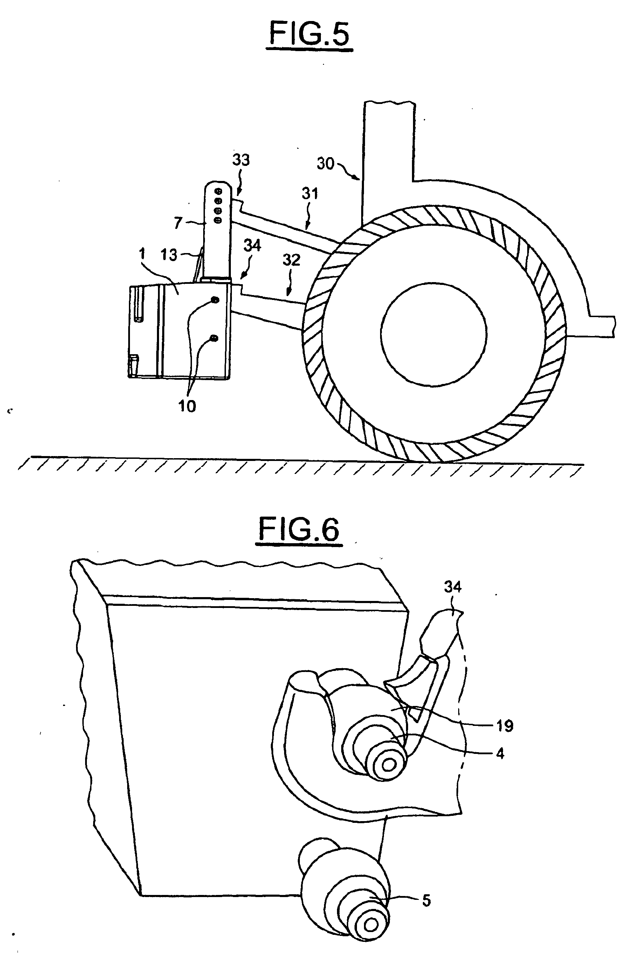

La masse de lestage et d'équilibrage 1, représentée sur la figure 1, comporte des moyens de fixation 2 sur un tracteur. Les moyens de fixation 2 comprennent une potence 3 et des axes transversaux 4 et 5 destinés à coopérer respectivement avec un dispositif de levage 31 et 32 prévue sur un tracteur 30, comme on le voit sur la figure 5.

La potence 3 comprend une platine 6 et une chape verticale comprenant deux éléments verticaux 7. La potence 3 est fixée à son extrémité 3a sur le dessus de la masse de lestage et d'équilibrage 1 et à son extrémité opposée 3b, au dispositif de levage 31 par l'un des trous 8 situés en partie haute des éléments verticaux 7.

Les axes transversaux 4 et 5 présentent des parties 4a et 5a noyées dans la masse de lestage et d'équilibrage 1 et une partie centrale 4b et 5b débouchant dans un évidement 9. De cette manière, les axes 4 et 5 sont porteurs du poids du système de lestage et d'équilibrage, permettant ainsi une meilleure robustesse du système de lestage et d'équilibrage. Chaque axe transversal 4 et 5 comprend deux portions latérales de chaque coté de l'axe de symétrie de la masse de lestage et d'équilibrage 1. Les axes peuvent par exemple traverser intégralement la masse de lestage et d'équilibrage 1.

L'axe transversal 4 est situé en partie haute de la masse de lestage et d'équilibrage 1, permettant lors de l'arrêt du tracteur, de s'appuyer sur le sol afin de le lever. De cette manière, il peut être possible de changer les roues arrière ou avant du tracteur, selon la position de la masse à l'avant ou à l'arrière du tracteur.

L'axe 4 peut être, à titre d'exemple, situé entre 80 et 90 millimètres de la partie supérieure de la masse de lestage et d'équilibrage 1.

L'axe transversal 5 est situé en partie basse de la masse de lestage et d'équilibrage 1, permettant de positionner la masse de lestage et d'équilibrage 1 à une certaine distance du sol afin d'obtenir une garde au sol plus élevée, de façon à éviter son endommagement lors de traversées de chemins accidentés, lors de labourage de champs ou de déboisement ou lors du chargement sur un autre véhicule.

Les axes 4 et 5 peuvent être situés, à titre d'exemple, à une distance d'environ 200 millimètres l'un de l'autre.

Les axes transversaux 4 et 5 sont bloqués par un moyen de blocage 10.

La figure 2 représente une vue en perspective de la masse de lestage et d'équilibrage 1.

La masse de lestage et d'équilibrage 1 présente sur au moins l'une de ses faces, des logements 11 et 12 en forme de queue d'aronde femelle pour le montage par emboîtement de masses supplémentaires. Les logements 11 sontsitués en partie haute à l'avant de la masse d'équilibrage 1 et les logements 12 sont situés en partie basse à l'avant de la masse de lestage et d'équilibrage 1, de façon à faciliter le crochetage d'autres masses.

La masse de lestage et d'équilibrage 1 peut comprendre un logement 13 situé sur le profil haut de la masse de lestage et d'équilibrage 1. Ce logement 13 peut être recouvert d'un couvercle 14 et peut être percé en son fond, de façon à évacuer d'éventuelles infiltrations d'eau et de poussière. Le couvercle 14 est relié à la platine 8 à l'aide de charnières 15. Ce logement 13, éventuellement fermé, permet d'équiper les véhicules agricoles d'un espace de rangement supplémentaire pouvant éventuellement accueillir différents outillages nécessaires aux travaux agricoles, tels que, par exemple, des clés, des boules d'attelage, des pièces d'usures...

La potence 3 est fixée à son extrémité 3a à la masse de lestage et d'équilibrage 1 par le biais de vis 16, par exemple de diamètre de 16mm.

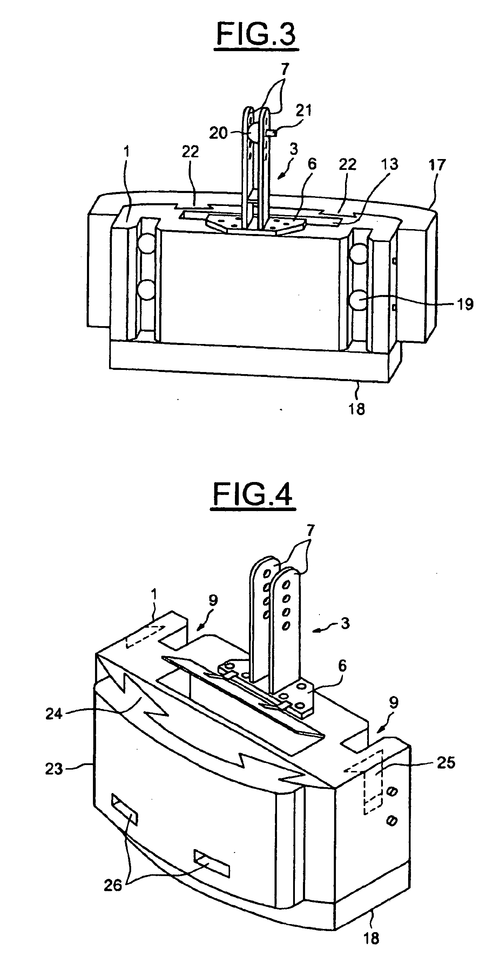

La figure 3 représente le système de lestage et d'équilibrage équipé de la masse de lestage et d'équilibrage 1 et de masses supplémentaires 17 et 18.

Les moyens de fixation 2 comprennent deux boules d'attelage 19 montées sur les parties centrales 4b et 5b des axes transversaux 4 et 5 et sont aptes à coopérer avec une chape de fixation 34 prévue sur le tracteur 30, comme illustré à la figure 5.

La potence 3 comprend une boule d'attelage 20 montée sur un axe 21 situé dans l'un des trous 8 et apte à coopérer avec une chape de fixation 33 pourvue sur le tracteur 30, comme illustré à la figure 5.

Les boules d'attelage 19 et 20 peuvent avoir un profil sphérique ou un profil toroïdal.

La masse supplémentaire 17 est une pièce en fonte de 800 kg. Elle comporte deux extrusions 22 en queue d'aronde mâle, de façon à s'emboîter dans les logements 11 en queue d'aronde femelle situés à l'avant de la masse de lestage et d'équilibrage 1.

La masse supplémentaire 18 est une pièce en fonte de 600 kg et comporte deux extrusions (non représentées) en queue d'aronde mâle de façon à s'emboîter dans les logements 12 en queue d'aronde femelle et ainsi épouser le profil bas de la masse de lestage et d'équilibrage 1.

La figure 4 représente le système de lestage et d'équilibrage équipé de la masse de lestage et d'équilibrage 1 et de masses supplémentaires 23 et 18. La masse supplémentaire 23 est une pièce en fonte de 400 kg et comporte deux extrusions 24 en queue d'aronde mâle, de façon à s'emboîter dans les logements 11 en queue d'aronde femelle situés à l'avant de la masse de lestage et d'équilibrage 1.

La masse de lestage et d'équilibrage 1 peut comprendre des logements 25 supplémentaires en queue d'aronde femelle, de façon à emboîter plus de masses supplémentaires. Chaque masse supplémentaire comprend sur sa face arrière des évidements 26 aptes à coopérer avec un dispositif de manutention. Le conducteur peut également emboîter les masses supplémentaires sans descendre du tracteur lorsque, par exemple, celles-ci ont été déposées sur des calles prévues à cet effet.

La figure 5 illustre la masse de lestage et d'équilibrage 1 positionnée sur un tracteur 30. Le tracteur 30 comprend un dispositif de levage 31 et 32 aptes à atteler la masse de lestage et d'équilibrage 1. Le dispositif de levage 31 comprend une chape de fixation 33 apte à coopérer avec la boule d'attelage 20 montée sur l'axe 21 situé dans un des trous 8 des éléments verticaux 7 de la potence 3. Le dispositif de levage 32 comprend deux chapes de fixations 34 aptes à coopérer avec les boules d'attelage montées sur les axes transversaux 4 et 5.

La figure 6 illustre la fixation de la boule d'attelage 19 dans la chape 34 du dispositif de levage 32. Par soucis de clarté, une partie d'une face intérieure d'un des logements 9a été représentée. On voit les parties centrales 4b et 5b respectivement des axes 4 et 5, sur lesquelles sont montées les boules d'attelage 19. Chaque chape de fixation 34 est insérée dans chacun des logements 9. La boule d'attelage 19, montée sur l'axe 4, est prisonnière de la chape de fixation 34 de façon à assurer une robustesse de la fixation du système de lestage et d'équilibrage sur le véhicule 30. La chape de fixation peut, de manière analogue emprisonner la boule d'attelage 19, montée sur l'axe 5 lors du positionnement de la masse de lestage et d'équilibrage en position haute.

A titre d'exemple, la masse de lestage et d'équilibrage 1 et les masses supplémentaire 18, 19 et 23 ont une densité comprise entre 7,05 et 7,2. La masse d'équilibrage 1 peut être, à titre d'exemple, une pièce en fonte de 1450kg ou de 950kg.

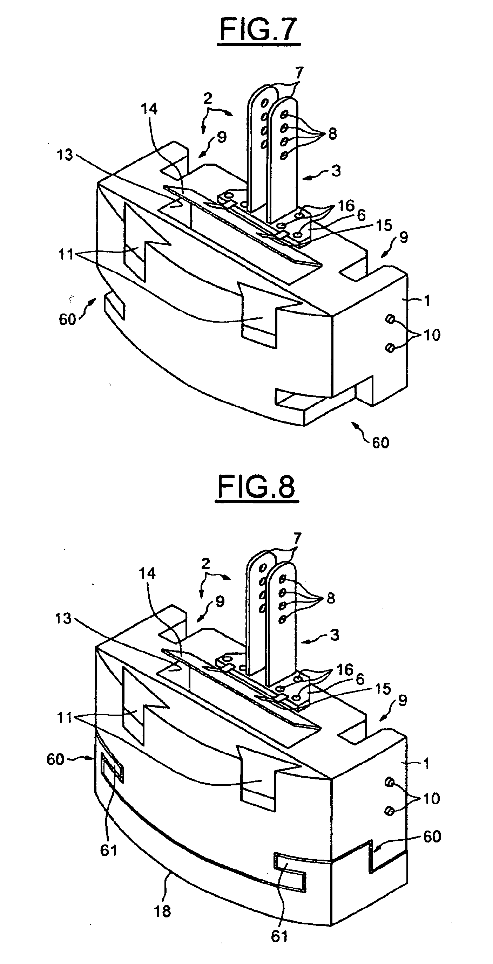

La figure 7 représente une vue en perspective d'un autre mode de réalisation d'une masse de lestage et d'équilibrage 1. On a également reporté sur la figure certains éléments décrits aux figures précédentes.

La masse de lestage et d'équilibrage 1 présente sur la partie basse de sa face avant et sur la partie basse de ses faces latérales, des logements additionnels 60 du type femelle pour le montage par emboîtement de masses supplémentaires 18. Les logements additionnels 60 facilitent le crochetage d'autres masses.

La figure 8 représente un autre mode de réalisation d'un système de lestage et d'équilibrage équipé de la masse de lestage etd'équilibrage 1 et d'une masse supplémentaire 18. La masse supplémentaire 18 est une pièce en fonte de 600 kg et comporte deux extrusions latérales 61 du type mâle, de façon à s'emboîter dans les logements additionnels 60 du type femelle situés latéralement et à l'avant de la masse de lestage et d'équilibrage 1. La masse supplémentaire 18 épouse les dimensions extérieures de la masse de lestage et d'équilibrage 1.

La masse de lestage et d'équilibrage 1 peut comprendre à la fois des logements additionnels 60 du type femelle et des logements 25 supplémentaires en queue d'aronde femelle, de façon à emboîter plus de masses supplémentaires.

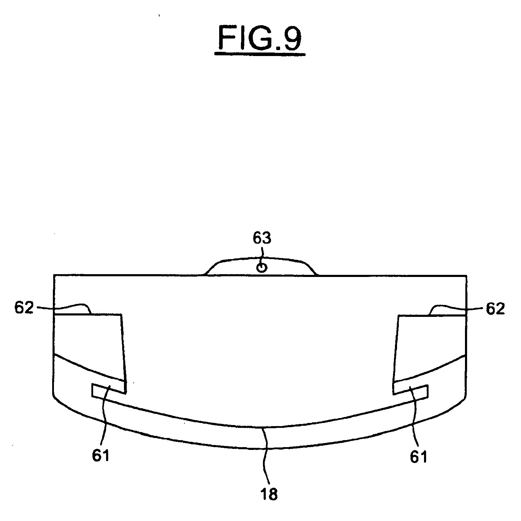

Sur la figure 9, on a représenté une vue en perspective d'une masse supplémentaire 18.

La masse supplémentaire 18 comporte deux extrusions latérales 61 de forme trapézoïdale, avec un emmanchement conique, de façon à s'emboîter dans les logements additionnels 60 du type femelle situés latéralement et à l'avant de la masse de lestage et d'équilibrage 1. Ainsi, la masse supplémentaire 18 épouse le profil bas de la masse de lestage et d'équilibrage 1. Les extrusions latérales comprennent en outre des butés arrières 62 de manière à ne pas faire coin lors de l'emboîtemen/désemboîtement de la masse supplémentaire 18 avec la masse de lestage et d'équilibrage 1. En outre, la masse supplémentaire peut comprendre un perçage 63, situé à l'arrière, pour recevoir un axe vertical (non représenté) en liaison avec un perçage prévu sur la masse de lestage et d'équilibrage 1 afin de bloquer la masse supplémentaire 18.

Grâce à l'invention proposée, l'utilisateur du tracteur peut lui-même fixer la masse de lestage et d'équilibrage 1 sur le tracteur à l'aide du dispositif de fixation situé sur le tracteur, puis des masses supplémentaires peuvent être emboîtées facilement sur la masse de lestage et d'équilibrage 1, sans nécessiter l'intervention de matériel de levage additionnel. Les masses proposées peuvent également comprendre des encoches de manutention standard, de façon à manipuler les masses à l'aide de matériel de levage.

De plus, l'invention permet de positionner les masses à deux hauteurs différentes à l'aide des axes transversaux fixés solidement à la masse de lestage et d'équilibrage. De cette manière, le système de lestage et d'équilibrage permet au véhicule soit d'avoir une meilleure adhérencedes roues sur le sol, soitde soulever les roues arrière ou avant du véhicule, selon que le système de lestage et d'équilibrage est positionné à l'avant ou à l'arrière du véhicule.

Enfin on notera que le système de lestage et d'équilibrage décrit ci-dessus propose un logement apte à faciliter le rangement d'outillages divers.

## Revendications

1. Système de lestage et d'équilibrage pour tracteur, notamment tracteur agricole, comprenant une masse de lestage et d'équilibrage (1) équipée de moyens de fixation (2) sur le tracteur (30) destinés à coopérer avec un dispositif de levage (31, 32), les moyens de fixation (2) de la masse de lestage et d'équilibrage (1) sur le tracteur (30) comportant au moins un axe transversal (4, 5) présentant des parties (4a, 5a) noyées dans la masse d'équilibrage (1) et une partie centrale (4b, 5b) débouchant dans un évidement (9) de la masse de lestage et d'équilibrage (1), chaque axe transversal (4, 5) comprenant deux portions d'arbre séparées de chaque côté de l'axe de symétrie de la masse de lestage et d'équilibrage (1), la masse de lestage et d'équilibrage (1) présentant deux évidements (9) traversés chacun par l'une des portions d'arbre, **caractérisé en ce que** les moyens de fixation (2) comprennent deux axes transversaux (4, 5) dont l'un est situé en partie haute et l'autre est situé en partie basse de la masse de lestage et d'équilibrage (1).

2. Système d'équilibrage selon la revendication 1, dans lequel les moyens de fixation (2) comprenant au moins deux boules d'attelage (19) montées sur les parties centrales (4b, 5b) des axes transversaux (4, 5) et aptes chacune à coopérer avec une chape de fixation (34) prévue sur le dispositif de levage (32).

3. Système de lestage et d'équilibrage selon la revendication 2, dans lequel les boules d'attelage (19) sont dotées d'un profil sphérique ou toroïdal.

4. Système de lestage et d'équilibrage l'une des revendications 1 à 3, dans lequel les moyens de fixation (2) de la masse de lestage et d'équilibrage (1) sur le tracteur (30) comprennent une potence (3) fixée sur la masse de lestage et d'équilibrage (1), destinée à coopérer avec le dispositif de levage (31).

5. Système de lestage et d'équilibrage selon l'une des revendications précédentes, dans lequel la masse de lestage et d'équilibrage (1) présente, sur au moins l'une de ses faces, des logements (11, 12) en queue d'aronde femelle pour le montage par emboîtement de masses supplémentaires (17, 18) présentant des extrusions (16) en queue d'aronde mâle.

6. Système de lestage et d'équilibrage selon l'une des revendications précédentes, dans lequel la masse de lestage et d'équilibrage (1) présente, sur au moins l'une de ses faces, des logements additionnels (60) du type femelle pour le montage par emboîtement de masses supplémentaires (18) présentant des extrusions latérales (61) du type mâle.

7. Système de lestage et d'équilibrage selon l'une des revendications précédentes, dans lequel la masse d'équilibrage (1) comprend sur sa face supérieure un logement (13) comprenant au moins un trou d'écoulement, de façon à créer un espace de rangement.

8. Système de lestage et d'équilibrage selon l'une des revendications 5 à 7, dans lequel chaque masse supplémentaire (17, 18) comprend sur sa face arrière des évidements (26) aptes à coopérer avec des moyens de manutention.

## Patentansprüche

1. Ballast- und Ausgleichssystem für eine Zugmaschine, insbesondere eine landwirtschaftliche Zugmaschine, das eine Ballast- und Ausgleichsmasse (1) enthält, die mit Befestigungseinrichtungen (2) an der Zugmaschine (30) ausgestattet ist, welche dazu bestimmt sind, mit einer Hubvorrichtung (31, 32) zusammenzuwirken, wobei die Befestigungseinrichtungen (2) der Ballast- und Ausgleichsmasse (1) an der Zugmaschine (30) mindestens eine Querachse (4, 5) aufweisen, die Teile (4a, 5a), die in die Ausgleichsmasse (1) eingebettet sind, und einen zentralen Teil (4b, 5b) aufweist, der in eine Aussparung (9) der Ballast- und Ausgleichsmasse (1) mündet, wobei jede Querachse (4, 5) zwei getrennte Wellenabschnitte auf jeder Seite der Symmetrieachse der Ballast- und Ausgleichsmasse (1) enthält, wobei die Ballast- und Ausgleichsmasse (1) zwei Aussparungen (9) aufweist, die je von einem der Wellenabschnitte durchquert werden, **dadurch gekennzeichnet, dass** die Befestigungseinrichtungen (2) zwei Querachsen (4, 5) enthalten, von denen eine sich im oberen Teil und die andere sich im unteren Teil der Ballast- und Ausgleichsmasse (1) befindet.

2. Ausgleichssystem nach Anspruch 1, bei dem die Befestigungseinrichtungen (2) mindestens zwei Kupplungskugeln (19) enthalten, die auf die zentralen Teile (4b, 5b) der Querachsen (4, 5) montiert sind und je mit einer Befestigungsgabel (34) zusammenwirken können, die an der Hubvorrichtung (32) vorgesehen ist.

3. Ballast- und Ausgleichssystem nach Anspruch 2, bei dem die Kupplungskugeln (19) mit einem kugelförmigen oder ringförmigen Profil versehen sind.

4. Ballast- und Ausgleichssystem nach einem der Ansprüche 1 bis 3, bei dem die Befestigungseinrichtungen (2) der Ballast- und Ausgleichsmasse (1) an der Zugmaschine (30) einen an der Ballast- und Ausgleichsmasse (1) befestigten Galgen (3) enthalten, der dazu bestimmt ist, mit der Hubvorrichtung (31) zusammenzuwirken.

5. Ballast- und Ausgleichssystem nach einem der vorhergehenden Ansprüche, bei dem die Ballast- und Ausgleichsmasse (1) auf mindestens einer ihrer Seiten Aufnahme-Schwalbenschwanz-Sitze (11, 12) für die Montage durch Einstecken von zusätzlichen Massen (17, 18) aufweist, die Einsteck-Schwalbenschwanz-Extrusionen (22) aufweisen.

6. Ballast- und Ausgleichssystem nach einem der vorhergehenden Ansprüche, bei dem die Ballast- und Ausgleichsmasse (1) auf mindestens einer ihrer Seiten zusätzliche Sitze (60) vom Aufnahmetyp für die Montage durch Einstecken von zusätzlichen Massen (18) aufweist, die seitliche Extrusionen (61) von Einstecktyp aufweisen.

7. Ballast- und Ausgleichssystem nach einem der vorhergehenden Ansprüche, bei dem die Ausgleichsmasse (1) an ihrer Oberseite einen Sitz (13) enthält, der mindestens ein Abflussloch enthält, um einen Stauraum zu erzeugen.

8. Ballast- und Ausgleichssystem nach einem der Ansprüche 5 bis 7, bei dem jede zusätzliche Masse (17, 18) an ihrer Rückseite Aussparungen (26) enthält, die mit Handhabungseinrichtungen zusammenwirken können.

## Claims

1. Ballast and balancing system for a tractor, notably an agricultural tractor, comprising a ballast and balancing mass (1) equipped with fastening means (2) on the tractor (30) intended to cooperate with a lifting device (31, 32), the means (2) for fixing the ballast and balancing mass (1) on the tractor (30) comprising at least one transversal axis (4, 5) having portions (4a, 5a) embedded in the balancing mass (1) and a central portion (4b, 5b) opening into a void (9) in the ballast and balancing mass (1), each transversal axis (4, 5) comprising two separate shaft portions on each side of the axis of symmetry of the ballast and balancing mass (1), the ballast and balancing mass (1) having two voids (9) each passed through by one of the shaft portions, **characterized in that** the fixing means (2) comprise two transversal axes (4, 5) of which one is situated in the top part and the other is situated in the bottom part of the ballast and balancing mass (1).

2. Balancing system according to Claim 1, in which the fixing means (2) comprise at least two coupling balls (19) mounted on the central portions (4b, 5b) of the transversal axes (4, 5) and each suitable for cooperating with a fixing cap (34) provided on the lifting device (32).

3. Ballast and balancing system according to Claim 2, in which the coupling balls (19) are provided with a spherical or toroidal profile.

4. Ballast and balancing system according to one of Claims 1 to 3, in which the means (2) for fixing the ballast and balancing mass (1) on the tractor (30) comprise a beam (3) fixed to the ballast and balancing mass (1), intended to cooperate with the lifting device (31).

5. Ballast and balancing system according to one of the preceding claims, in which the ballast and balancing mass (1) has, on at least one of its faces, female dovetail-shaped receptacles (11, 12) for mate-fitting additional masses (17, 18) having male dovetail-shaped extrusions (22).

6. Ballast and balancing system according to one of the preceding claims, in which the ballast and balancing mass (1) has, on at least one of its faces, additional female-type receptacles (60) for mate-fitting additional masses (18) having male-type lateral extrusions (61).

7. Ballast and balancing system according to one of the preceding claims, in which the balancing mass (1) comprises, on its top face, a receptacle (13) comprising at least one weephole, so as to create a stowage space.

8. Ballast and balancing system according to one of Claims 5 to 7, in which each additional mass (17, 18) comprises, on its rear face, voids (26) suitable for cooperating with handling means.
